# FASCICULE DE BREVET EUROPEEN

(11) **EP 1 163 771 B1**
(45) Date de publication et mention de la délivrance du brevet: **11.05.2005**
(21) Numéro de dépôt: 00911024.8
(22) Date de dépôt: 22.03.2000
(51) Int. Cl.: H04L 27/233

(54) **DECODEUR BPSK SYNCHRONE**
SYNCHRONER BPSK DEKODIERER
SYNCHRONOUS BPSK DECODER

(30) Priorité: 25.03.1999 FR 9904109
(43) Date de publication de la demande: 19.12.2001
(73) Titulaire: Inside Contactless, 13856 Aix en Provence Cedex 3 (FR)
(72) Inventeur: CHARRAT, Bruno, 13090 Aix en Provence (FR)
(74) Mandataire: Marchand, André
(86) Numéro de dépôt international: PCT/FR2000/000711
(87) Numéro de publication internationale: WO 2000/059173

(56) Documents cités:
- EP-A- 0 045 260
- DE-A- 3 424 623
- US-A- 5 640 427

## Description

La présente invention concerne un procédé et un dispositif pour décoder un signal pulsé codé BPSK ("Binary Phase Shift Keying"), c'est-à-dire codé par sauts de phase.

La présente invention concerne notamment le décodage de données codées BPSK envoyées par une carte à puce sans contact, et la réalisation d'une tête de lecture de carte à puce sans contact d'une structure simple et peu coûteuse.

Conformément au projet de norme ISO 14443, une carte à puce sans contact fonctionnant par induction électromagnétique émet des données sous la forme d'un signal codé BPSK. Le signal codé est une sous-porteuse d'une fréquence de 847 KHz obtenue par division de la fréquence de 13,56 MHz du champ magnétique ambiant émis par une tête de lecture de la carte à puce. Un bit est codé par un nombre déterminé de cycles de la sous-porteuse, et un changement de la valeur d'un bit, relativement au bit précédent, est codé par une inversion de la phase de la sous-porteuse. A la réception, le signal codé a l'aspect d'un signal pulsé composé d'impulsions ayant un rapport cyclique de 0,5 et présentant des sauts de phase. La détection des sauts de phase permet de déduire la valeur des bits envoyés par la carte à puce.

Dans l'art antérieur, il est habituel de décoder un signal codé BPSK au moyen d'un circuit à verrouillage de phase PLL ("Phase-Loocked Loop"), dont l'élément essentiel est un oscillateur contrôlé en tension VCO ("Voltage-Controlled Oscillator"). Toutefois, un circuit à verrouillage de phase est un circuit complexe d'un coût non négligeable au regard des autres éléments d'une tête de lecture de carte à puce sans contact.

Un exemple de circuit de démodulation à verrouillage de phase est représenté en figure 4 de la demande DE 34 24 623 ou son équivalent US 4 608 540, le circuit représenté comportant une boucle à verrouillage de phase comprenant un oscillateur VCO [10] et un filtre de boucle [13].

Une autre technique classique pour décoder un signal codé BPSK consiste à effectuer un échantillonnage et un traitement du signal au moyen d'un algorithme numérique. Toutefois, l'échantillonnage et le traitement d'un signal à 847 KHz nécessitent une fréquence d'échantillonnage élevée et un microprocesseur rapide qui présente également l'inconvénient d'être d'un coût non négligeable.

Divers circuits de démodulation par échantillonnage sont également décrits dans la demande DE 34 24 623 ou son équivalent US 4 608 540 (précités), notamment en relation avec les figures 5, 7 et 11 de ces documents.

Enfin, le brevet US 5 640 427 décrit en relation avec sa figure 1 un démodulateur cohérent de signaux codés MDPSK ou 2PSK comprenant un oscillateur [16] délivrant deux signaux LO_I et LO_Q décalés en phase de 90°. Les signaux LO_I et LO_Q sont combinés de façon logique avec un signal à démoduler IF, pour produire deux signaux d'activation de deux compteurs [32, 34] pilotés par une horloge de comptage dont la fréquence est égale à N fois la fréquence F_IF du signal IF à démoduler. Les sorties des compteurs sont traitées par un calculateur [36] prévu pour mettre en oeuvre diverses relations mathématiques décrites dans ce document.

La présente invention a pour objectif de prévoir un procédé de décodage BPSK qui puisse être mis en oeuvre au moyen d'éléments simples et peu coûteux afin, notamment, de permettre la réalisation d'une tête de lecture de carte à puce sans contact de faible coût et de faible encombrement.

Cet objectif est atteint par la prévision d'un procédé pour décoder un signal pulsé codé par sauts de phase, dans lequel un bit est codé par N impulsions du signal codé et un changement de la valeur d'un bit relativement au bit précédent est codé par une inversion de la phase du signal codé, procédé comprenant les étapes consistant à : échantillonner le signal pulsé codé au moyen d'un signal puisé d'échantillonnage de même fréquence que le signal codé, avec une fenêtre d'échantillonnage d'une durée inférieure à la durée d'une impulsion du signal codé, et pour chaque groupe de N impulsions du signal codé, compter le nombre d'impulsions échantillonnées issues de l'échantillonnage du signal codé et attribuer au bit codé par le groupe de N impulsions une valeur logique qui est fonction du nombre d'impulsions échantillonnées compté.

Selon un mode de réalisation, une première valeur logique est attribuée à un bit lorsque le nombre d'impulsions échantillonnées est supérieur ou égal à un nombre prédéterminé, et une seconde valeur logique est attribuée à un bit lorsque le nombre d'impulsions échantillonnées est inférieur audit nombre prédéterminé.

Selon un mode de réalisation, le nombre prédéterminé est égal à la moitié du nombre N d'impulsions de codage d'un bit.

Selon un mode de réalisation, l'échantillonnage du signal codé est réalisé par combinaison du signal codé et du signal d'échantillonnage au moyen de la fonction logique ET, le signal d'échantillonnage étant composé d'impulsions de plus courte durée que les impulsions du signal codé, définissant chacune une fenêtre d'échantillonnage.

Selon un mode de réalisation, le procédé comprend une étape de synchronisation du signal d'échantillonnage visant à caler les impulsions du signal d'échantillonnage sur les impulsions d'un bit de démarrage.

De préférence, l'étape de synchronisation est réalisée pendant la réception d'au moins un bit de synchronisation précédant le bit de démarrage, dont la valeur est l'inverse de celle du bit de démarrage, et consiste à régler la phase du signal d'échantillonnage de manière qu'aucune impulsion échantillonnée n'apparaisse.

La présente invention concerne également un dispositif pour le décodage d'un signal pulsé codé par sauts de phase, le codage consistant à coder un bit par N impulsions du signal codé et à coder un changement de la valeur d'un bit relativement au bit précédent par une inversion de la phase du signal codé, dispositif comprenant des moyens de décodage agencés pour échantillonner le signal pulsé codé au moyen d'un signal pulsé d'échantillonnage de même fréquence que le signal codé, avec une fenêtre d'échantillonnage d'une durée inférieure à la durée d'une impulsion du signal codé, délivrant un signal échantillonné, et pour chaque groupe de N impulsions du signal codé, compter le nombre d'impulsions échantillonnées issues de l'échantillonnage du signal codé et attribuer au bit codé par le groupe de N impulsions une valeur logique qui est fonction du nombre d'impulsions échantillonnées compté.

Selon un mode de réalisation, les moyens de décodage sont agencés pour attribuer une première valeur logique à un bit lorsque le nombre d'impulsions échantillonnées est supérieur ou égal à un nombre prédéterminé, et attribuer une seconde valeur logique à un bit lorsque le nombre d'impulsions échantillohnées est inférieur audit nombre prédéterminé.

Selon un mode de réalisation, le nombre prédéterminé utilisé par les moyens de décodage est égal à la moitié du nombre N d'impulsions de codage d'un bit.

Selon un mode de réalisation, les moyens de décodage sont agencés pour échantillonner le signal codé par combinaison du signal codé et du signal d'échantillonnage au moyen de la fonction logique ET, le signal d'échantillonnage étant composé d'impulsions de plus courte durée que les impulsions du signal codé, définissant chacune une fenêtre d'échantillonnage.

Selon un mode de réalisation, les moyens de décodage sont agencés pour exécuter une étape de synchronisation du signal d'échantillonnage visant à caler les impulsions du signal d'échantillonnage sur les impulsions d'un bit de démarrage.

Selon un mode de réalisation, les moyens de décodage sont agencés pour réaliser l'étape de synchronisation pendant la réception d'au moins un bit de synchronisation précédant le bit de démarrage, dont la valeur est l'inverse de celle du bit de démarrage, en réglant la phase du signal d'échantillonnage de manière qu'aucune impulsion échantillonnée n'apparaisse.

Selon un mode de réalisation, le dispositif comprend un modulateur de largeur d'impulsions pour délivrer le signal d'échantillonnage, un échantillonneur recevant en entrée le signal codé et le signal d'échantillonnage, délivrant un signal échantillonné, un compteur recevant sur son entrée de comptage le signal échantillonné, pour compter le nombre d'impulsions échantillonnées issues de l'échantillonnage du signal codé, et un moyen pour lire la sortie du compteur et pour attribuer à un bit codé par un groupe de N impulsions une valeur logique qui est fonction du nombre d'impulsions échantillonnées compté par le compteur.

Selon un mode de réalisation, le dispositif comprend des moyens pour recevoir le signal pulsé codé par couplage inductif.

La présente invention concerne également un lecteur de carte à puce sans contact, comprenant un dispositif selon l'invention.

Ces caractéristiques et avantages de la présente invention, ainsi que d'autres, seront exposés plus en détail dans la description suivante du procédé de l'invention et d'un exemple de mise en oeuvre du procédé dans une tête de lecture de carte à puce sans contact, en relation avec les figures jointes parmi lesquelles :
- les figures 1A, 1B, 1C sont des chronogrammes de signaux électriques illustrant le procédé de l'invention,
- les figures 2A, 2B, 2C représentent plus en détail une partie des chronogrammes des figures 1A, 1B, 1C et illustrent une étape de synchronisation,
- la figure 3 représente sous forme de blocs le schéma électrique d'une tête de lecture de carte à puce sans contact ainsi que le schéma électrique d'un circuit intégré de carte à puce sans contact, et
- la figure 4 représente l'organigramme d'un programme exécutant le procédé de l'invention.

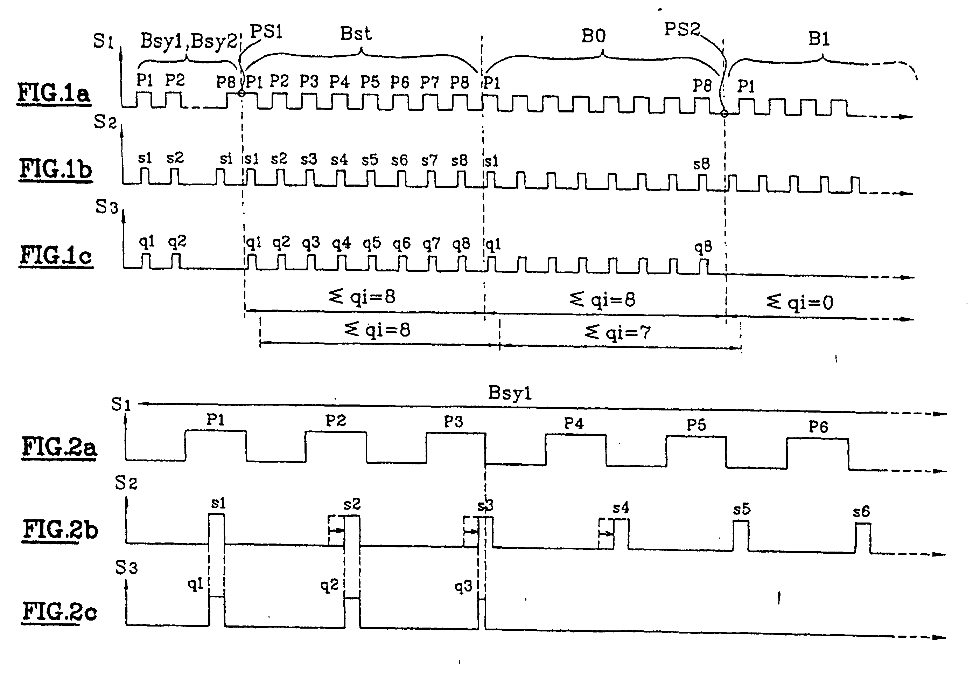

La figure 1A représente un signal pulsé S1 codé par sauts de phase, comprenant classiquement des impulsions pᵢ ayant un rapport cyclique de 0,5. Le signal S1 est par exemple un signal codé envoyé par une carte à puce sans contact et reçu par un lecteur de carte. Le signal S1 est le résultat du codage BPSK d'une suite de bits, chaque bit étant codé par un nombre déterminé d'impulsions pᵢ, ici huit impulsions p₁ à p₈. Le signal S1 comprend des bits de synchronisation Bsyᵢ, ici deux bits Bsy₁, Bsy₂, un bit de démarrage Bst, et des bits de données Bᵢ formant une suite de bits B₀, B₁, B₂, B₃... devant être décodée. Sur la figure 1A, on a représenté les premières impulsions pᵢ des bits de synchronisation Bsy₁, Bsy₂, les 8 impulsions du bit de démarrage Bst et du premier bit de données B₀, ainsi que les premières impulsions pᵢ du bit B₁. Un changement de la valeur d'un bit relativement au bit précédent est codé par une inversion de la phase du signal S1, se traduisant par un saut de phase du signal S1 à l'instant où le nouveau bit est émis.

Par convention, les bits de synchronisation Bsyᵢ sont à "1" alors que le bit de démarrage Bst est à "0", de sorte que le signal S1 codé BPSK présente un saut de phase PS1 entre l'impulsion p₈ du deuxième bit de synchronisation Bsy₂ et l'impulsion p₁ du bit de démarrage Bst. Sur la figure 1A, le signal S1 présente également un saut de phase PS2 entre l'impulsion p₈ du bit de démarrage Bst et l'impulsion p₁ du premier bit de données B₀, ce qui signifie que la valeur du bit B₀ est l'inverse de celle du bit Bst, soit ici la valeur "1".

Selon l'invention, on échantillonne le signal S1 au moyen d'un signal d'échantillonnage S2 de même fréquence que le signal S1, représenté sur la figure 2B. Ce signal est constitué d'impulsions s₁, s₂, s₃... d'une durée inférieure à celle des impulsions pᵢ, par exemple le quart de la durée des impulsions pᵢ, définissant des fenêtres d'échantillonnage. Les signaux S1 et S2 sont combinés au moyen de la fonction logique ET, pour produire un signal échantillonné S3 représenté sur la figure 2C. Le signal S3 est composé d'impulsions échantillonnées qᵢ qui apparaissent quand les impulsions sᵢ sont calées sur les impulsions pᵢ.

Le procédé selon l'invention comprend une étape de synchronisation du signal S2 sur le bit de démarrage Bst, effectuée pendant la réception des bits de synchronisation Bsyᵢ. Cette étape consiste à régler la phase du signal S1 de manière que les impulsions sᵢ soient calées sur les impulsions pᵢ du bit de démarrage Bst, pour que la réception du bit de démarrage Bst provoque l'apparition d'impulsions échantillonnées qᵢ. Les chronogrammes des figures 2A, 2B, 2C représentent plus en détail l'étape de synchronisation. Dans cet exemple, on suppose que la première impulsion s₁ du signal S2 est calée sur la première impulsion p₁ du bit de synchronisation Bsy₁ et qu'une impulsion échantillonnée q₁ apparaît. Aussi, à la période suivante, on décale l'impulsion suivante s₂ d'un huitième de période T. Si une impulsion échantillonnée q₂ apparaît à nouveau, comme c'est le cas sur la figure 2C, on décale encore l'impulsion suivante s₃ d'un huitième de période et ainsi de suite jusqu'à ce que les impulsions échantillonnées qᵢ n'apparaissent plus. Le signal d'échantillonnage S2 est alors synchronisé au signal S1.

Si l'on se réfère à nouveau aux figures 1A à 1C, on voit ainsi que la réception du bit de démarrage Bst a pour effet de faire apparaître à nouveau les impulsions échantillonnées qᵢ, en raison du saut de phase PS1. La valeur de chaque bit suivant B₀, B₁, B₂ relativement au bit précédent est déterminée par un comptage du nombre d'impulsions échantillonnées qᵢ apparaissant au cours des 8 impulsions pᵢ constituant le bit. Par exemple, le fait que 8 impulsions échantillonnées q₁ à q₈ (Σqᵢ = 8) apparaissent pendant la durée du bit B₀ confirme que le bit B₀ a la même valeur que le bit Bst, soit la valeur "0". De même, le fait qu'aucune impulsion échantillonnée (Σqᵢ = 0) n'apparaisse pendant la durée du bit B₁ permet de déduire que la phase du signal S1 a changé et que le bit B₁ présente une valeur inverse de celle du bit B₀, soit la valeur "1".

Ainsi, le procédé selon l'invention permet de détecter les sauts de phase du signal S1 au moyen d'un signal d'échantillonnage S2 de même fréquence que le signal S1, par un simple comptage des impulsions échantillonnées. Il n'est pas nécessaire de prévoir une fréquence d'échantillonnage élevée et des moyens de calcul rapides, comme cela est le cas dans l'art antérieur. Par ailleurs, l'utilisation d'un signal d'échantillonnage S2 constitué d'impulsions sᵢ d'une durée inférieure à celle des impulsions pᵢ est un aspect optionnel mais avantageux du procédé de l'invention permettant de générer le signal échantillonné S3 en combinant les signaux S1 et S2 au moyen d'une simple porte ET. Il n'est pas nécessaire d'avoir recours à un circuit échantillonneur-bloqueur ("sample-hold"), d'une structure complexe et coûteuse, qui serait déclenché par les fronts montants ou descendants du signal S2. En pratique, la fonction logique ET de l'échantillonneur SMP peut être réalisée de façon simple au moyen d'un transistor de type FET ou équivalent piloté par le signal d'échantillonnage S2, ayant sa source connectée à la masse et son drain connecté à l'entrée du compteur CMPT et à la sortie de l'amplificateur AMP.

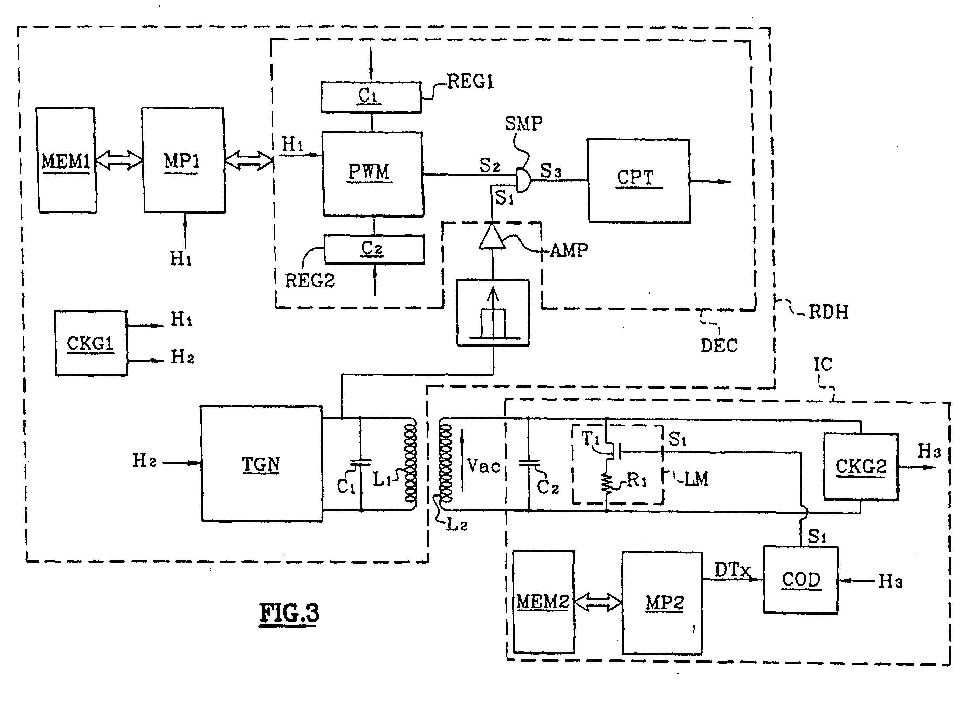

La figure 3 représente le schéma électrique d'une tête de lecture RDH de carte à puce sans contact mettant en oeuvre le procédé de l'invention. La tête de lecture RDH comprend un microprocesseur MP1, une mémoire MEM1 pour stocker un programme et des données, un circuit d'antenne résonant comprenant une bobine L1 et une capacité C1 en parallèle, un circuit TGN pour exciter le circuit d'antenne L1C1 et un générateur d'horloge CKG1 délivrant des signaux d'horloge H1 et H2. Le signal d'horloge H1 est appliqué au microprocesseur MP1 et le signal H2 appliqué au circuit excitateur TGN. La fréquence du signal H2 est de 13,56 MHz conformément au projet de norme ISO 14443. La fréquence du signal H1 est égale à celle du signal H2 ou est un multiple de celle-ci.

La tête de lecture RDH comprend également un décodeur DEC selon l'invention, comprenant un échantillonneur SMP, un modulateur de largeur d'impulsion PWM et un compteur CPT. L'échantillonneur SMP prend ici la forme d'une porte ET dont la sortie est appliquée à l'entrée du compteur CPT. La porte ET reçoit en entrée la sortie du modulateur PWM et la sortie d'un amplificateur AMP connecté au circuit d'antenne L1C1 par l'intermédiaire d'un filtre passe-bande FLT calé sur les 847 KHz. Le modulateur PWM est piloté par le signal d'horloge H1 et comprend un registre REG1 recevant une consigne C1 définissant le rapport cyclique des impulsions qu'il délivre, ainsi qu'un registre REG2 recevant une consigne C2 définissant la période de ces impulsions.

Bien que cela ne soit représenté sur la figure 3 dans un souci de simplicité, les sorties du modulateur PWN, de l'amplificateur AMP et du compteur CPT sont accessibles au microprocesseur. Le microprocesseur MP1 est par exemple un microprocesseur du commerce dans lequel le modulateur PWM et le compteur CPT sont des éléments intégrés, comme le microprocesseur PIC16C6X commercialisé par la société Microchip Technology®.

En regard de la tête de lecture RDH, la figure 3 représente également le schéma d'un circuit intégré IC de carte à puce sans contact. Le circuit IC comprend un microprocesseur MP2, une mémoire MEM2 et un circuit d'antenne L2C2. Le circuit d'antenne comprend une capacité intégrée C2 et une bobine d'antenne L2 généralement incorporée dans le corps d'une carte plastique (non représentée). Le circuit IC comprend également un circuit de modulation de charge LM, un générateur d'horloge CKG2 comprenant des diviseurs de fréquence ainsi qu'un codeur COD de type BPSK dont la sortie pilote le circuit modulateur LM. Le circuit LM et le générateur CKG2 sont connectés tous deux aux bornes du circuit d'antenne L2C2. Le modulateur LM comprend par exemple un transistor T1 en série avec une résistance de charge R1. Le générateur CKG2 délivre un signal d'horloge H3 appliqué au codeur COD.

Lorsque le circuit d'antenne L1C1 génère un champ magnétique FLD alternatif, par exemple de 13,56 MHz (norme ISO 14443), une tension induite Vac de même fréquence apparaît dans le circuit d'antenne L2C2. La fréquence de la tension Vac est divisée par le générateur d'horloge CKG2 qui délivre un signal d'horloge H3 de 847 KHz (norme ISO 14443). Le microprocesseur MP2 délivre au codeur COD des données DTx à transmettre, comprenant deux bits de synchronisation Bsyᵢ à "1" (ou plus, selon convention), un bit de démarrage Bst égal à "0" et des bits de données B₀, B₁, B₂... Le codeur COD délivre une sous-porteuse codée BPSK d'une fréquence de 847 KHz, appliquée au transistor de modulation T1. Cette sous-porteuse constituée d'impulsions ayant un rapport cyclique de 0,5 est conforme au signal S1 décrit plus haut en relation avec la figure 1A. La sous-porteuse S1 se répercute par couplage inductif dans le circuit d'antenne primaire L1C1, et est extraite du signal d'excitation à 13,56 MHz par le filtre FLT pour se retrouver en entrée de l'échantillonneur SMP (porte ET) après avoir été amplifiée.

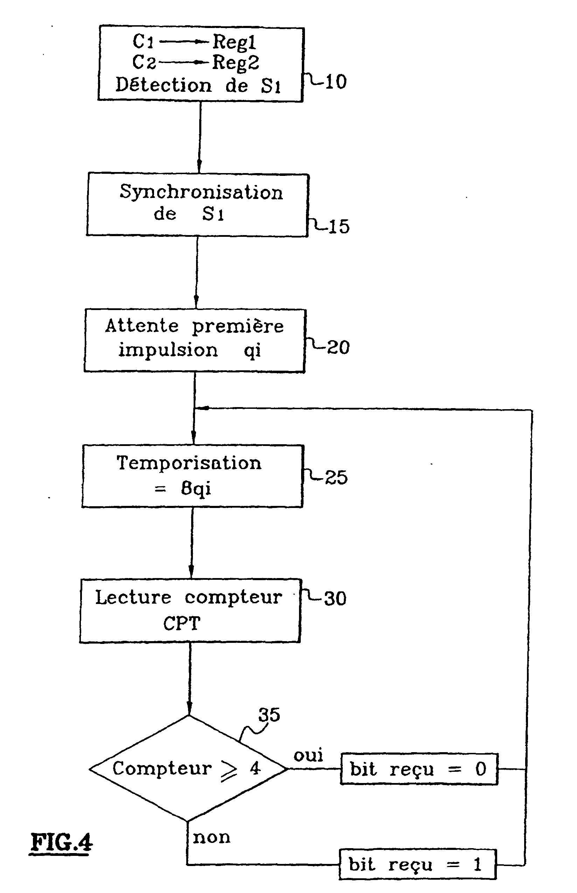

Pour décoder la sous-porteuse S1, le procédé de l'invention est mis en oeuvre par le microprocesseur MP1 sous la gouverne d'un programme chargé dans la mémoire MEM1. Les principales étapes de ce programme, illustrées par l'organigramme de la figure 4, sont décrites ci-après.

Au cours de l'étape 10, le microprocesseur MP1 surveille la sortie de l'amplificateur AMP et attend la première impulsion qᵢ du bit de synchronisation Bsy₁. Pendant cette période d'attente, le microprocesseur programme le modulateur PWM en chargeant dans les registres REG1 et REG2 des consignes C1 et C2 choisies de manière que le modulateur PWM délivre un signal S2 du type de celui représenté sur la figure 2B, ayant la même fréquence que la sous-porteuse S1, soit ici 847 KHz, et constitué par des impulsions sᵢ d'une durée au moins égale ou inférieure à un quart de la période de la sous-porteuse S1.

L'étape 15 commence lorsque la première impulsion qᵢ du bit de synchronisation Bsy₁ est reçue. Le microprocesseur règle la phase du signal S2 de la manière décrite plus haut en relation avec les figures 2A à 2C. A cet effet, le microprocesseur observe la sortie de l'échantillonneur SMP. La différence de phase initiale entre les signaux S1 et S2 étant aléatoire, des impulsions qᵢ peuvent apparaître ou ne pas apparaître. Si des impulsions qᵢ apparaissent, le microprocesseur décale pas-à-pas la phase du signal S2 jusqu'à ce que les impulsions échantillonnées qᵢ disparaissent (figure 2C). Le décalage progressif de la phase du signal S2 est réalisé par exemple en inhibant le générateur PWM pendant un certain nombre de cycles d'horloge H1. Si aucune impulsion qᵢ n'apparaît, le décalage de la phase du signal S2 n'est pas, en principe, nécessaire. Par sécurité, on peut toutefois prévoir un cycle de balayage de phase permettant de choisir la phase optimale du signal S2. Par exemple, sur la figure 2B, un décalage supplémentaire peut être appliqué au signal S2 pour que l'impulsion s₅ se trouve bien centrée entre les deux impulsions p₅ et p₆ du signal S1.

L'étape de synchronisation étant terminée, le microprocesseur remet le compteur CPT à zéro au cours de l'étape 20 et attend en surveillant la sortie du compteur CPT, que la première impulsions échantillonnée qᵢ et les sept impulsions suivantes du bit de démarrage Bst soient délivrées par l'échantillonneur SMP.

L'étape 20 est suivie d'une étape de temporisation 25 d'une durée correspondant à 8 impulsions pᵢ du signal S1, soit 8 cycles d'horloge H2. Le signal d'horloge H1 du microprocesseur étant proportionnel ou égal au signal H2, un telle temporisation peut être obtenue de façon simple par une suite d'instructions sans opération de type NOP ("No Operation"), correspondant chacune à un certain nombre de cycles d'horloge H1.

Au cours des étapes 30 et 35, le microprocesseur lit à la sortie du compteur CPT le nombre d'impulsions échantillonnées qᵢ délivrées par l'échantillonneur SMP et en déduit la valeur du bit reçu. Le bit de démarrage étant par convention égal à 0, le bit reçu est égal à 0 si huit impulsions qᵢ ont été enregistrées ou est égal à 1 si aucune impulsion qᵢ n'a été reçue. Au terme de ces étapes, le microprocesseur revient à l'étape de temporisation 25 pour la réception du bit suivant.

En pratique, il peut se produire que le microprocesseur fasse des erreurs de comptage des impulsions qᵢ entraînant un décalage de la fenêtre de comptage. Si l'on se réfère à la figure 1C, on voit par exemple que l'oubli ou la perte d'une impulsion qᵢ décale à droite la fenêtre de comptage, de telle sorte qu'un bit à 0 peut correspondre à un comptage de 7 ou de 8 impulsions qᵢ selon la valeur du bit suivant. Pour prendre en compte une telle éventualité, on considère qu'un bit à 0 est reçu si le nombre d'impulsions échantillonnées qᵢ est supérieur ou égal à la moitié du nombre N d'impulsions pᵢ servant à coder un bit, soit ici 4 impulsions. Inversement, on considère qu'un bit à 1 est reçu quand le nombre d'impulsions qᵢ est inférieur à 4. Des essais réalisés par la demanderesse montrent qu'une telle approximation permet de compenser les erreurs de synchronisation de la fenêtre de comptage dans la plupart des cas. Dans certains cas, il peut arriver que le décalage de la fenêtre de comptage entraîne la perte d'un bit. Toutefois, une telle erreur est détectée au moment de la vérification de la signature (CRC) de la trame binaire envoyée par le circuit IC. Comme diverses autres erreurs de transmission sont susceptibles de se produire, notamment en raison de perturbations du champ magnétique, les erreurs isolées dues au procédé de l'invention n'ont pas de conséquence pratique significative.

En définitive, le procédé de démodulation BPSK selon l'invention constitue une alternative avantageuse aux procédés analogiques classiques nécessitant une boucle à verrouillage de phase et aux procédés numériques classiques nécessitant des fréquences d'échantillonnage élevées et un algorithme de traitement du signal. Le procédé de l'invention peut être mis en oeuvre avec un microprocesseur à faible coût ayant un signal d'horloge relativement lent de l'ordre de 13,56 MHz. Le procédé de l'invention peut aussi être mis en oeuvre au moyen d'un circuit logique programmable ou d'un processeur spécifique de type ASIC ("Application Specific Integrated Circuit").

Bien entendu, le procédé de l'invention n'est pas réservé au décodage de données envoyées par une carte à puce sans contact et concerne de façon générale le décodage de données codées BPSK, quelle que soit la manière dont ces données sont reçues.

## Revendications

1. Procédé pour décoder un signal pulsé codé par sauts de phase (S1), dans lequel un bit (Bsyᵢ, Bst, Bᵢ) est codé par N impulsions (pᵢ) du signal codé (S1) et un changement de la valeur d'un bit relativement au bit précédent est codé par une inversion de la phase du signal codé (S1), procédé **caractérisé en ce qu'**il comprend les étapes consistant à :
- échantillonner le signal pulsé codé (S1) au moyen d'un signal pulsé d'échantillonnage (S2) de même fréquence que le signal codé (S1), avec une fenêtre d'échantillonnage d'une durée inférieure à la durée d'une impulsion (pᵢ) du signal codé (S1), et
- pour chaque groupe de N impulsions du signal codé (S1), compter le nombre (Σqᵢ) d'impulsions échantillonnées (qᵢ) issues de l'échantillonnage du signal codé (S1) et attribuer au bit codé par le groupe de N impulsions une valeur logique qui est fonction du nombre (Σqᵢ) d'impulsions échantillonnées (qᵢ) compté.

2. Procédé selon la revendication 1 dans lequel :
- une première valeur logique est attribuée à un bit lorsque le nombre (Σqᵢ) d'impulsions échantillonnées (qᵢ) est supérieur ou égal à un nombre prédéterminé, et
- une seconde valeur logique est attribuée à un bit lorsque le nombre (Σqᵢ) d'impulsions échantillonnées (qᵢ) est inférieur audit nombre prédéterminé.

3. Procédé selon la revendication 2, dans lequel le nombre prédéterminé est égal à la moitié du nombre N d'impulsions de codage d'un bit.

4. Procédé selon l'une des revendications 1 à 3, dans lequel l'échantillonnage du signal codé (S1) est réalisé par combinaison du signal codé (S1) et du signal d'échantillonnage (S2) au moyen de la fonction logique ET, le signal d'échantillonnage étant composé d'impulsions (sᵢ) de plus courte durée que les impulsions (pᵢ) du signal codé (S1), définissant chacune une fenêtre d'échantillonnage.

5. Procédé selon l'une des revendications 1 à 4, comprenant une étape de synchronisation du signal d'échantillonnage (S2) visant à caler les impulsions (sᵢ) du signal d'échantillonnage (S2) sur les impulsions (pᵢ) d'un bit de démarrage (Bst).

6. Procédé selon la revendication 5, dans lequel l'étape de synchronisation est réalisée pendant la réception d'au moins un bit de synchronisation (Bsyᵢ) précédant le bit de démarrage (Bst), dont la valeur est l'inverse de celle du bit de démarrage (Bst), et consiste à régler la phase du signal d'échantillonnage (S2) de manière qu'aucune impulsion échantillonnée (qᵢ) n'apparaisse.

7. Dispositif pour le décodage d'un signal pulsé codé par sauts de phase (S1), le codage consistant à coder un bit (Bsyᵢ, Bst, Bᵢ) par N impulsions (pᵢ) du signal codé (S1) et à coder un changement de la valeur d'un bit relativement au bit précédent par une inversion de la phase du signal codé (S1), **caractérisé en ce qu'**il comprend des moyens de décodage (MP1, MEM1, DEC, PWM, SMP, CPT) agencés pour :
- échantillonner le signal pulsé codé (S1) au moyen d'un signal pulsé d'échantillonnage (S2) de même fréquence que le signal codé (S1), avec une fenêtre d'échantillonnage d'une durée inférieure à la durée d'une impulsion (pᵢ) du signal codé (S1), délivrant un signal échantillonné (S3), et
- pour chaque groupe de N impulsions du signal codé (S1), compter le nombre (Σqᵢ) d'impulsions échantillonnées (qᵢ) issues de l'échantillonnage du signal codé (S1) et attribuer au bit codé par le groupe de N impulsions une valeur logique qui est fonction du nombre (Σqᵢ) d'impulsions échantillonnées (qᵢ) compté.

8. Dispositif selon la revendication 7, dans lequel les moyens de décodage sont agencés pour :
- attribuer une première valeur logique à un bit lorsque le nombre (Σqᵢ) d'impulsions échantillonnées (qᵢ) est supérieur ou égal à un nombre prédéterminé, et
- attribuer une seconde valeur logique est attribuée à un bit lorsque le nombre (Σqᵢ) d'impulsions échantillonnées (qᵢ) est inférieur audit nombre prédéterminé.

9. Dispositif selon la revendication 7, dans lequel le nombre prédéterminé utilisé par les moyens de décodage est égal à la moitié du nombre N d'impulsions de codage d'un bit.

10. Dispositif selon l'une des revendications 7 à 9, dans lequel les moyens de décodage sont agencés pour échantillonner le signal codé (S1) par combinaison du signal codé (S1) et du signal d'échantillonnage (S2) au moyen de la fonction logique ET, le signal d'échantillonnage étant composé d'impulsions (sᵢ) de plus courte durée que les impulsions (pᵢ) du signal codé (S1), définissant chacune une fenêtre d'échantillonnage.

11. Dispositif selon l'une des revendications 7 à 10, dans lequel les moyens de décodage sont agencés pour exécuter une étape de synchronisation du signal d'échantillonnage (S2) visant à caler les impulsions (sᵢ) du signal d'échantillonnage (S2) sur les impulsions (pᵢ) d'un bit de démarrage (Bst).

12. Dispositif selon l'une des revendications 7 à 11, dans lequel les moyens de décodage sont agencés pour réaliser l'étape de synchronisation pendant la réception d'au moins un bit de synchronisation (Bsyᵢ) précédant le bit de démarrage (Bst), dont la valeur est l'inverse de celle du bit de démarrage (Bst), en réglant la phase du signal d'échantillonnage (S2) de manière qu'aucune impulsion échantillonnée (qᵢ) n'apparaisse.

13. Dispositif selon l'une des revendications 7 à 12, comprenant :
- un modulateur de largeur d'impulsions (PWM) pour délivrer le signal d'échantillonnage (S2),
- un échantillonneur (SMP) recevant en entrée le signal codé (S1) et le signal d'échantillonnage (S2), délivrant un signal échantillonné (S3),
- un compteur (CPT) recevant sur son entrée de comptage le signal échantillonné (S3), pour compter le nombre (Σqᵢ) d'impulsions échantillonnées issues de l'échantillonnage du signal codé (S1), et
- un moyen (MP1) pour lire la sortie du compteur et pour attribuer à un bit codé par un groupe de N impulsions une valeur logique qui est fonction du nombre (Σqᵢ) d'impulsions échantillonnées (qᵢ) compté par le compteur

14. Dispositif selon l'une des revendications 7 à 13, comprenant des moyens (L1C1, FLT, AMP) pour recevoir le signal pulsé codé (S1) par couplage inductif.

15. Lecteur de carte à puce sans contact (RDH), comprenant un dispositif selon l'une des revendications 7 à 14.

## Patentansprüche

1. Verfahren zum Decodieren eines codierten gepulsten Signals durch Phasensprünge (S1), bei dem ein Bit (Bsyᵢ, Bst, Bᵢ) durch N Impulse (pᵢ) des codierten Signals (S1) codiert wird und ein Wertwechsel eines Bits in Bezug auf das vorhergehende Bit durch ein Umkehren der Phase des codierten Signals (S1) codiert wird, **dadurch gekennzeichnet, dass** es die Schritte umfasst, die in Folgendem bestehen:
- Abtasten des codierten gepulsten Signals (S1) mittels eines gepulsten Abtastsignals (S2) mit der gleichen Frequenz wie das codierte Signal (S1), mit einem Abtastfenster mit einer Dauer kleiner als die Dauer eines Impulses (pᵢ) des codierten Signals (S1), und
- für jede Gruppe von N Impulsen des codierten Signals (S1) Zählen der Anzahl (Σqᵢ) abgetasteter Impulse (qᵢ), die aus dem Abtasten des codierten Signals (S1) hervorgehen, und Zuweisen zu dem durch die Gruppe von N Impulsen codierten Bit eines logischen Werts, der von der Anzahl (Σqᵢ) gezählter abgetasteter Impulse (qᵢ) abhängt.

2. Verfahren nach Anspruch 1, bei dem:
- einem Bit ein erster logischer Wert zugewiesen wird, wenn die Anzahl (Σqᵢ) von (qᵢ) größer oder gleich einer vorausbestimmten Anzahl ist, und
- einem Bit ein zweiter logischer Wert zugewiesen wird, wenn die Anzahl (Σqᵢ) abgetasteter Impulse (qᵢ) kleiner ist als die vorausbestimmte Anzahl.

3. Verfahren nach Anspruch 2, bei dem die vorausbestimmte Anzahl gleich der Hälfte der Anzahl N Codierungsimpulse eines Bits ist.

4. Verfahren nach einem der Ansprüche 1 bis 3, bei dem das Abtasten des codierten Signals (S1) durch Kombination des codierten Signals (S1) und des Abtastsignals (S2) mittels der logischen Funktion UND durchgeführt wird, wobei das Abtastsignal aus Impulsen (sᵢ) mit kürzerer Dauer als die Impulse (pᵢ) des codierten Signals (S1), die jeder ein Abtastfenster definieren, besteht.

5. Verfahren nach einem der Ansprüche 1 bis 4, das einen Synchronisationsschritt des Abtastsignals (S2) umfasst, der darauf abzielt, die Impulse (sᵢ) des Abtastsignals (S2) auf die Impulse (pᵢ) eines Startbits (Bst) zu synchronisieren.

6. Verfahren nach Anspruch 5, bei dem der Synchronisationsschritt während des Empfangs mindestens eines Synchronisationsbits (Bsyᵢ) durchgeführt wird, das dem Startbit (Bst) vorausgeht, dessen Wert der umgekehrte Wert des Startbits (Bst) ist, und darin besteht, die Phase des Abtastsignals (S2) so einzustellen, dass kein abgetasteter Impuls (qᵢ) erscheint.

7. Vorrichtung zum Decodieren eines codierten gepulsten Signals durch Phasensprünge (S1), wobei das Codieren darin besteht, ein Bit (Bsyᵢ, Bst, Bᵢ) durch N Impulse (pᵢ) des codierten Signals (S1) zu codieren und einen Wechsel des Werts eines Bits in Bezug auf das vorhergehende Bit durch ein Umkehren der Phase des codierten Signals (S1) zu codieren, **dadurch gekennzeichnet, dass** es Decodierungsmittel (MP1, MEM1, DEC, PWM, SMP, CPT) umfasst, die eingerichtet sind:
- um das codierte gepulste Signal (S1) mittels eines gepulsten Abtastsignals (S2) mit der gleichen Frequenz wie das codierte Signal (S1) abzutasten, mit einem Abtastfenster mit einer Dauer kleiner als die Dauer eines Impulses (pᵢ) des codierten Signals (S1), das ein abgetastetes Signal (S3) liefert, und
- um für jede Gruppe von N Impulsen des codierten Signals (S1) die Anzahl (Σqᵢ) abgetasteter Impulse (qᵢ) zu zählen, die aus dem Abtasten des codierten Signals (S1) hervorgehen, und dem von der Gruppe N Impulse codierten Bit einen logischen Wert zuzuweisen, der von der Anzahl (Σqᵢ) gezählter abgetasteter Impulse (qᵢ) abhängt.

8. Vorrichtung nach Anspruch 7, bei welcher die Mittel zum Decodieren eingerichtet sind:
- um einem Bit, wenn die Anzahl (Σqᵢ) abgetasteter Impulse (qᵢ) größer oder gleich einer vorausbestimmten Anzahl ist, einen ersten logischen Wert zuzuweisen, und
- um einem Bit, wenn die Anzahl (Σqᵢ) abgetasteter Impulse (qᵢ) kleiner als die vorausbestimmte Anzahl ist, einen zweiten Wert zu zuweisen.

9. Vorrichtung nach Anspruch 7, bei der die von den Decodierungsmitteln verwendete vorausbestimmte Anzahl gleich der Hälfte der Anzahl N Codierimpulse eines Bits ist.

10. Vorrichtung nach einem der Ansprüche 7 bis 9, bei der die Decodierungsmittel eingerichtet sind, um das codierte Signal (S1) durch Kombination des codierten Signals (S1) und des Abtastsignals (S2) mittels der logischen Funktion UND abzutasten, wobei das Abtastsignal aus Impulsen (sᵢ) mit kürzerer Dauer als die Impulse (pᵢ) des codierten Signals (S1), die jeder ein Abtastfenster definieren, besteht.

11. Vorrichtung nach einem der Ansprüche 7 bis 10, bei der die Decodierungsmittel eingerichtet sind, um einen Synchronisationsschritt des Abtastsignals (S2) auszuführen, der darauf abzielt, die Impulse (sᵢ) des Abtastsignals (S2) auf die Impulse (pᵢ) eines Startbits (Bst) zu synchronisieren.

12. Vorrichtung nach einem der Ansprüche 7 bis 11, bei der die Decodierungsmittel eingerichtet sind, um den Synchronisationsschritt während des Empfangs mindestens eines Synchronisationsbits (Bsyᵢ) durchzuführen, das dem Startbit (Bst) vorausgeht, dessen Wert der umgekehrte Wert des Startbits (Bst) ist, indem die Phase des Abtastsignals (S2) so eingestellt wird, dass kein abgetasteter Impuls (qᵢ) erscheint.

13. Vorrichtung nach einem der Ansprüche 7 bis 12, umfassend:
- einen Impulsbreitenmodulator (PWM) zum Liefern des Abtastsignals (S2),
- einen Abtaster (SMP), der am Eingang das codierte Signal (S1) und das Abtastsignal (S2) empfängt, der ein abgetastetes Signal (S3) liefert,
- einen Zähler (CPT), der auf seinem Zähleingang das abgetastete Signal (S3) empfängt, um die Anzahl (Σqᵢ) abgetasteter Impulse zu zählen, die aus dem Abtasten des codierten Signals (S1) hervorgehen, und
- ein Mittel (MP1) zum Lesen des Ausgangs des Zählers und um einem durch die Gruppe von N Impulsen codierten Bit einen logischen Wert zuzuweisen, der von der Anzahl (Σqᵢ) abgetasteter Impulse (qᵢ) abhängt, die der Zähler gezählt hat.

14. Vorrichtung nach einem der Ansprüche 7 bis 13, die Mittel (L1C1, FLT, AMP) umfasst, um das codierte gepulste Signal (S1) durch induktives Koppeln zu empfangen.

15. Berührungsfreies Chipkartenlesegerät (RDH), das eine Vorrichtung gemäß einem der Ansprüche 7 bis 14 umfasst.

## Claims

1. Method for decoding a pulsed signal coded by phase jumps (S1), in which one bit (Bsyi, Bst, Bi) is coded by N pulses (pi) of the coded signal (S1) and a change of the value of a bit in relation to the previous bit is coded by an inversion of the coded signal (S1) phase, a method **characterised in that** it comprises steps of:
- sampling the coded pulsed signal (S1) by means of a pulsed strobe (S2) of the same frequency as the coded signal (S1), with a sampling window the duration of which is less than the duration of one pulse (pi) of the coded signal (S1), and
- for each group of N pulses of the coded signal (S1), counting the number (Σqi) of sampled pulses (qi) resulting from the sampling of the coded signal (S1) and assigning a logic value to the bit coded by the group of N pulses which is a function of the number (Σqi) of sampled pulses (qi) counted.

2. Method according to claim 1 in which:
- a first logic value is assigned to a bit when the number (Σqi) of sampled pulses (qi) is higher than or equal to a predefined number, and
- a second logic value is assigned to a bit when the number (Σqi) of sampled pulses (qi) is lower than the aforementioned predefined number.

3. Method according to claim 2, in which the predefined number is equal to half the number N of bit coding pulses.

4. Method according to one of claims 1 to 3, in which the coded signal (S1) is sampled by combining the coded signal (S1) and the strobe (S2) by means of the logic function AND, the strobe being composed of pulses (si) of a shorter duration than the pulses (pi) of the coded signal (S1), each defining a sampling window.

5. Method according to one of claims 1 to 4, comprising a strobe (S2) synchronisation step aiming at setting the pulses (si) of the strobe (S2) to the pulses (pi) of a start bit (Bst).

6. Method according to claim 5, in which the synchronisation step is carried out during the receipt of at least one synchronisation bit (Bsyi) preceding the start bit (Bst), the value of which is the opposite of that of the start bit (Bst), and involves adjusting the strobe (S2) phase so that no sampled pulse (qi) appears.

7. Device for decoding a pulsed signal coded by phase jumps (S1), the coding including coding a bit (Bsyi, Bst, Bi) by N pulses (pi) of the coded signal (S1) and coding a change of the value of a bit in relation to the previous bit by an inversion of the coded signal (S1) phase, **characterised in that** it comprises decoding means (MP1, MEM1, DEC, PWM, SMP, CPT) arranged to:
- sample the coded pulsed signal (S1) by means of a pulsed strobe (S2) of the same frequency as the coded signal (S1), with a sampling window the duration of which is less than the duration of one pulse (pi) of the coded signal (S1), delivering a sampled signal (S3), and
- for each group of N pulses of the coded signal (S1), counting the number (Σqi) of sampled pulses (qi) resulting from the sampling of the coded signal (S1) and assigning a logic value to the bit coded by the group of N pulses which is a function of the number (Σqi) of sampled pulses (qi) counted.

8. Device according to claim 7, in which the decoding means are arranged to:
- assign a first logic value to a bit when the number (Σqi) of sampled pulses (qi) is higher than or equal to a predefined number, and
- assigning a second logic value to a bit when the number (Σqi) of sampled pulses (qi) is lower than the aforementioned predefined number.

9. Device according to claim 7, in which the predefined number used by the decoding means is equal to half the number N of bit coding pulses.

10. Device according to one of claims 7 to 9, in which the decoding means are arranged to sample the coded signal (S1) by combining the coded signal (S1) and the strobe (S2) by means of the logic function AND, the strobe being composed of pulses (si) of a shorter duration than the pulses (pi) of the coded signal (S1), each defining a sampling window.

11. Device according to one of claims 7 to 10, in which the decoding means are arranged to carry out a strobe (S2) synchronisation step aiming at setting the pulses (si) of the strobe (S2) to the pulses (pi) of a start bit (Bst).

12. Device according to one of claims 7 to 11, in which the decoding means are arranged to carry out the synchronisation step during the receipt of at least one synchronisation bit (Bsyi) preceding the start bit (Bst), the value of which is the opposite of that of the start bit (Bst), by adjusting the strobe (S2) phase so that no sampled pulse (qi) appears.

13. Device according to one of claims 7 to 12, comprising:
- a pulse width modulator (PWM) to deliver the strobe (S2),
- a sampler (SMP) receiving the coded signal (S1) and the strobe (S2) at input, delivering a sampled signal (S3),
- a counter (CPT) receiving the sampled signal (S3) at its counting input, to count the number (Σqi) of sampled pulses resulting from the sampling of the coded signal (S1), and
- a means (MP1) for reading the counter output and for assigning a logic value to a bit coded by a group of N pulses which is a function of the number (Σqi) of sampled pulses (qi) counted by the counter.

14. Device according to one of claims 7 to 13, comprising means (L1C1, FLT, AMP) for receiving the coded pulsed signal (S1) by inductive coupling.

15. Contactless smart card reader (RDH), comprising a device according to one of claims 7 to 14.
